# EUROPEAN PATENT SPECIFICATION

(11) **EP 2 775 391 B1**
(45) Date of publication and mention of the grant of the patent: **27.04.2016**
(21) Application number: 14154340.5
(22) Date of filing: 07.02.2014
(51) Int. Cl.: G06F 3/06, G06F 1/32, H04N 5/765, H04N 5/781

(54) **Data storage device**
Datenspeichergerät
Dispositif de stockage de données

(30) Priority: 04.03.2013 JP 2013041756
(43) Date of publication of application: 10.09.2014
(73) Proprietor: Buffalo Inc., Nagoya-shi, Aichi 460-8315 (JP)
(72) Inventor: Ishidoshiro, Takashi, Nagoya-shi, Aichi 460-8315 (JP)
(74) Representative: Huebner, Stefan Rolf

(56) References cited:
- WO-A1-2012/046929
- WO-A1-2012/155987
- JP-A- H09 251 259
- US-A1- 2008 183 836
- US-A1- 2010 057 975

## Description

### Field of the Invention

The present disclosure relates to a data storage device such as NAS (Network Attached Storage).

### Background of the Invention

Recent years have seen attention focused on systems each using a storage device adapted to store multimedia data such as audio data against the backdrop of increasing digitalization of audio and other signals.

The storage device in each of such systems is normally connected, for example, to a data player as a multimedia data-capable device (device adapted to play audio and other signals from multimedia data). More specifically, in the case of a NAS, a connection is normally made between a NAS adapted to store multimedia data and a multimedia data-capable device, for example, via a LAN (Local Area Network) interface or LAN cable.

It should be noted that an apparatus is disclosed in Japanese Patent Laid-Open No. 2007-004493 which is designed to prevent adverse impact caused by increased load of a server function section. This apparatus does so by monitoring the load of the server function section, and controlling and keeping the load resulting from other functions to a minimum.

US 2010/0057975 A1 discloses a hard disc drive that is connected to a personal computer through to interfaces, which are a USB and a network interface, wherein the interfaces are switched by a bus switch. JP H09-251259 A discloses a copying machine comprising a human-detection sensor, that drives i.e. a cooling fan when the human-body detection sensor indicates the presence of an operator at the copying machine. When the operator leaves the copying machine, the output signal driving the cooling fan is turned off. WO 2012/155987 A1 discloses a method for operating a component of a communication network, wherein a decision criterion, such as traffic information, is monitored and wherein the component enters a power save mode when the decision criterion is fulfilled.

It is common that a PC (Personal Computer) or other device is separately connected to the storage device to store multimedia data therein or manage such data in the storage device. However, it has become gradually clear that noise is occasionally superimposed on multimedia data that is output to be played because of signal input from the PC or because of the impact of, for example, broadcast signals transmitted intermittently via a LAN if connection is made using the LAN. This noise may adversely affect the quality of multimedia data to be played.

In light of the foregoing, it is desirable to provide a data storage device that contributes to a reduced likelihood of noise being superimposed on multimedia data.

### Summary of the Invention

According to an embodiment of the present disclosure, there is provided a data storage device that includes a storage section, first and second communication sections, and a connection control section. The storage section stores multimedia data. The first communication section outputs multimedia data from the storage section exclusively to a multimedia data-capable device. The second communication section is provided separately from the first communication section to exchange information with external equipment. The connection control section controls electrical connection/disconnection of the second communication section to/from other circuit sections as defined in claim 1. The above connection/disconnection is performed by a switch portion and the connection or disconnection performed by the switch portion is controlled by the connection control section.

This prevents electrical signals arising from the operation of the second communication section from affecting communications handled by the first communication section. This contributes to a reduced likelihood of noise being superimposed on multimedia data.

Here, on the other hand, the connection control section may control the switch portion so as to interrupt the supply of power to the second communication section when multimedia data is read from the storage section and output via the first communication section. In this case, because the supply of power is interrupted, there is no longer any impact of electrical signals arising from the operation of the second communication section. This contributes to a reduced likelihood of noise being superimposed on multimedia data output from the first communication section.

Further, the connection control section may include a physical relay unit. On the other hand, the first and second communication sections may each include a network interface. In this case, network addresses specified for the network interfaces of the first and second communication sections are different. This ensures clear separation between communications handled by the first and second communication sections.

Still further, the data storage device may further include an address issuance section. The address issuance section issues, to the multimedia data-capable device connected via the first communication section, a network address that belongs to the same network as the network address specified for the first communication section. This ensures ease in establishing connection with the multimedia data-capable device.

Still further, the first communication section may include an optical connector and output multimedia data to the multimedia data-capable device using optical signals. This contributes to a further reduced likelihood of noise being superimposed on multimedia data output from the first communication section.

Still further, the data storage device according to an embodiment of the present disclosure may include a sensor adapted to detect the presence or absence of any individual in the vicinity. In this case, the data storage device performs a predetermined control task based on the detection result of the sensor. This makes it possible to perform control tasks including preventing noise from being produced when an individual is in the vicinity.

The present disclosure contributes to a reduced likelihood of noise being superimposed on multimedia data.

### Brief Description of the Drawings

Fig. 1 is a block diagram illustrating a configuration example of a data storage device according to an embodiment of the present disclosure;
Fig. 2 is a configuration block diagram illustrating an example of a second communication section of the data storage device according to the embodiment of the present disclosure;
Fig. 3 is a configuration block diagram illustrating an example of a power supply section of the data storage device according to the embodiment of the present disclosure; and
Fig. 4 is a block diagram illustrating another configuration example of the data storage device according to the embodiment of the present disclosure.

### Detailed Description of a Preferred Embodiment

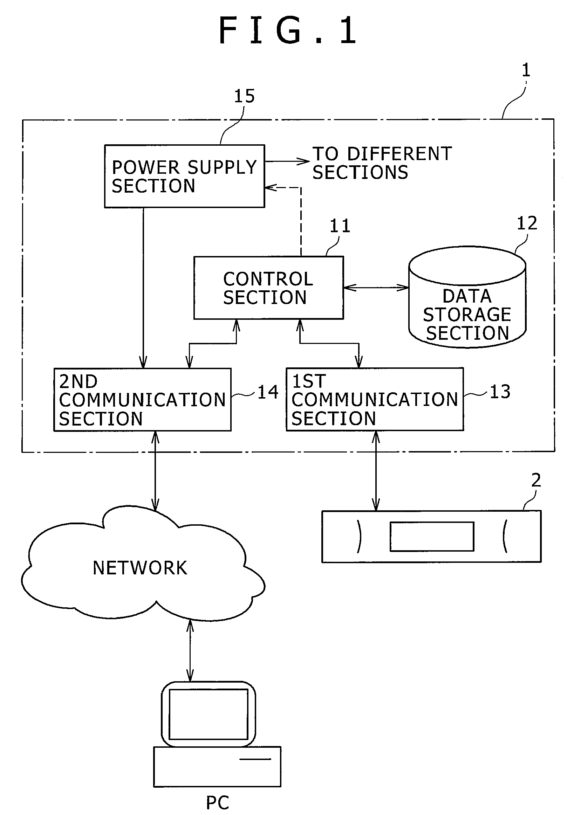

A description will be given below of an embodiment of the present disclosure with reference to the accompanying drawings. A data storage device 1 according to the embodiment of the present disclosure includes a control section 11, a data storage section 12, first and second communication sections 13 and 14, and a power supply section 15 as illustrated in Fig. 1. The data storage device 1 is connected to a multimedia data-capable device 2.

Here, the control section 11 is a program-controlled device such as microcomputer and operates in accordance with a program stored in the data storage section 12 or other storage means (which may be incorporated in the control section 11). In accordance with an instruction from the device connected via the second communication section 14, the control section 11 stores data received via the second communication section 14 in the data storage section 12 or reads data from the data storage section 12 and transmits the data via the second communication section 14. Further, in accordance with an instruction supplied from external equipment, the control section 11 reads data from the data storage section 12 and outputs the data via the first communication section 13. Still further, in the present embodiment, the control section 11 controls electrical connection/disconnection of the second communication section 14 to/from other circuit sections (i.e., the control section 11 itself or other circuits). The operation of the control section 11 will be described in detail later.

The data storage section 12 (which implements the storage section of the present disclosure) includes a memory device or disk device. As an example, the data storage section 12 includes, for example, a HDD (harddisk drive) or SSD (Solid State Drive). The data storage section 12 in the present embodiment stores multimedia data such as audio data or other.

The first communication section 13 is connected to the multimedia data-capable device 2. The first communication section 13 outputs multimedia data from the data storage section 12 exclusively to the multimedia data-capable device 2 in accordance with an instruction from the control section 11. In an example of the present embodiment, the first communication section 13 includes a network interface that is connected to a network such as Ethernet (registered trademark). In this case, the data storage device 1 in the present embodiment and the multimedia data-capable device 2 are connected to each other via a LAN.

The second communication section 14 is connected to external equipment such as PC. The second communication section 14 outputs data (including multimedia data) from the data storage section 12 to connected external equipment in accordance with an instruction supplied from the control section 11. Further, the second communication section 14 outputs a request or data, supplied from external equipment, to the control section 11. In an example of the present embodiment, the second communication section 14 may also include a network interface that is connected to a network such as Ethernet. In this case, a connection is made between the data storage device 1 and external equipment such as PC via a LAN. The power supply section 15 supplies power to different sections.

Further, the multimedia data-capable device 2 connected to the data storage device 1 is, for example, a so-called network player. In response to a user operation, the multimedia data-capable device 2 requests a list of multimedia data stored in the data storage device 1 to the data storage device 1 or instructs that multimedia data stored in the data storage device 1 be played (read) or the playing thereof (reading operation) be interrupted. The multimedia data-capable device 2 decodes audio or video data from multimedia data output from the data storage device 1 or further converts the decoded data into analog signals and outputs the resultant signals.

The data storage device 1 in the present embodiment basically has the above configuration. Further, the data storage device 1 in the present embodiment operates in such a manner as to control the electrical connection/disconnection of the second communication section 14 to/from other circuit sections. To enable this operation, the second communication section 14 of the data storage device 1 in the present embodiment may be configured, for example, as described below.

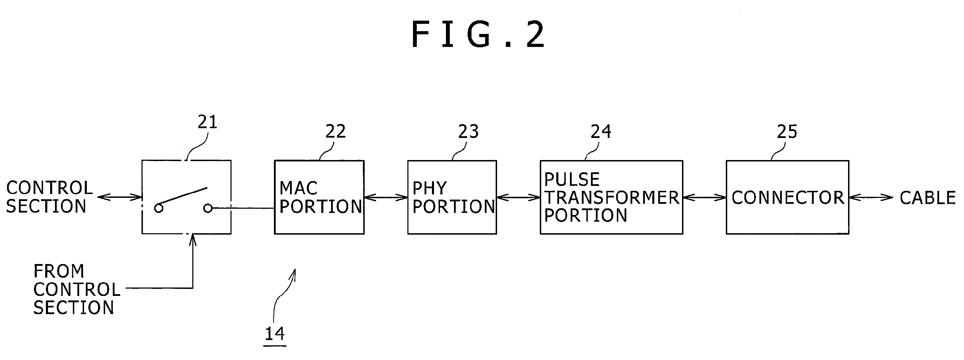

That is, an example of the second communication section 14 in the present embodiment includes a switch portion 21, a MAC portion 22, a PHY portion 23, a pulse transformer portion 24, and a connector 25 as illustrated in Fig. 2. Here, the switch portion 21 is a relay or other device adapted to electrically isolate the control section 11 from the MAC portion 22 of the second communication section 14 or connect them in accordance with an instruction supplied from the control section 11. In this example of the present embodiment, the connection control section is implemented by the control section 11.

If connected to the control section 11, the MAC portion 22 receives, from the control section 11, data to be transmitted, creates a data frame (MAC frame) including the received data in a predetermined format, and outputs the data frame to the PHY portion 23. Further, the MAC portion 22 extracts a MAC frame from data supplied from the PHY portion 23 and outputs data included in the extracted MAC frame to the control section 11.

The PHY portion 23 converts the MAC frame data, output from the MAC portion 22, to pulse signals, and outputs the signals to the pulse transformer portion 24. Further, the PHY portion 23 shapes the pulse signals supplied from the pulse transformer portion 24 and outputs the data represented by the pulse signals to the MAC portion 22.

The pulse transformer portion 24 outputs the pulse signals, output from the PHY portion 23, to the connector 25. Further, the pulse transformer portion 24 outputs pulse signals arriving at the connector 25 to the PHY portion 23 while at the same time blocking high voltages that may find their way via the connector 25. The connector 25 is, for example, a modular connector compliant with RJ45 or other standard and connected to a LAN cable.

In the example of the present embodiment, when multimedia data is read from the data storage section 12 and output via the first communication section 13, the control section 11 controls the switch portion 21 of the second communication section 14 to electrically isolate the control section 11 from the MAC portion 22 of the second communication section 14. Further, in response to an instruction received via the first communication section 13 (or received as an operation to be performed on the operation section which is not shown) that the reading of multimedia data from the data storage section 12 should be interrupted or that communication should be made via the second communication section 14, the control section 11 controls the switch portion 21 of the second communication section 14 to electrically connect the control section 11 and the MAC portion 22 of the second communication section 14.

Thanks to these operations of the control section 11 and the switch portion 21, even if a signal addressed to the second communication section 14 arrives at the second communication section 14 while transmission of multimedia data is in progress, data based on this signal is not transferred from the MAC portion 22 to the control section 11. This contributes to a reduced likelihood of adverse impact on multimedia data output signal.

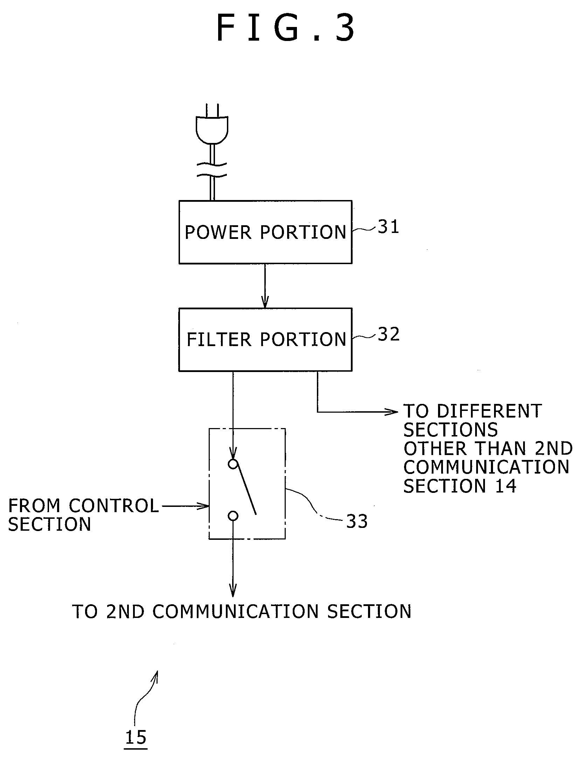

Further, in another example of the data storage device 1 in the present embodiment, the power supply section 15 includes a power portion 31, a filter portion 32, and a switch portion 33 as illustrated in Fig. 3. The power portion 31, for example, is supplied with AC power and transforms and rectifies the AC power, supplying DC power of a predetermined voltage level. More specifically, the power portion 31 supplies DC power to different sections including the control section 11 and the data storage section 12.

The filter portion 32 further removes ripples and other irregularities from the DC power supplied from the power portion 31 and outputs the resultant source voltage to the switch portion 33. In this example of the present embodiment, the different sections such as the control section 11, the data storage section 12, and the first communication section 13 other than the second communication section 14 may be supplied with power via the filter portion 32 (not through the switch portion 33).

The switch portion 33 is a relay or other device adapted to interrupt or start the supply of DC power to the second communication section 14 via the filter portion 32 in accordance with an instruction from the control section 11.

In this example of the present embodiment, the control section 11 controls the switch portion 33 of the power supply section 15 to interrupt the supply of power to the second communication section 14, when, for example, multimedia data is read from the data storage section 12 and output via the first communication section 13. Alternatively, if the switch portion 33 is OFF when the supply of power begins and, therefore, the supply of power is interrupted, the control section 11 may operate in the following manner. That is, the control section 11 may control the switch portion 33 of the power supply section 15 to start the supply of power to the second communication section 14 when the data storage section 12 is powered on. Further, the control section 11 controls the switch portion 33 of the power supply section 15 to start the supply of power to the second communication section 14, in response to an instruction received via the first communication section 13 (or received as an operation to be performed on the operation section which is not shown) that the reading of multimedia data from the data storage section 12 should be interrupted or that communication should be made via the second communication section 14. It should be noted that, in the case of this example, the second communication section 14 need not necessarily include the switch portion 21.

In this example of the present embodiment, even if a signal addressed to the second communication section 14 arrives at the second communication section 14 while transmission of multimedia data is in progress, no power is supplied to the second communication section 14. This contributes to a reduced likelihood of adverse impact on multimedia data output signal. Further, in this example, the second communication section 14 is completely inactive. Therefore, there is no likelihood of the second communication section 14 actively generating electric or magnetic signals. This contributes to a further reduced likelihood of adverse impact on multimedia data output signal.

It should be noted that, in the description given so far, a relay or other device is used as each of the switch portions 21 and 33. Such a relay relays power by physically closing or opening its contact. However, the present embodiment is not limited thereto. For example, the switch portion 21 may be implemented by a semiconductor element adapted to perform switching operations rather than a relay. On the other hand, if a relay is used, it is widely known that a bypass circuit, for example, is provided. Therefore, the description thereof is omitted here. Further, both normally open and normally closed relays may be used. A normally open relay is ON when it is activated. A normally closed relay is OFF when it is activated.

Further, the control section 11 in the present embodiment may specify different network addresses for the first and second communication sections 13 and 14 so that first and second communication sections 13 and 14 are connected to the different networks if the first and second communication sections 13 and 14 are network interfaces. This setup may be performed manually. Alternatively, this setup may be performed as described below.

That is, the control section 11 in the present embodiment serves as a DHCP (Dynamic Host Configuration Protocol) server. Then, when the multimedia data-capable device 2 is connected to the first communication section 13, the control section 11 notifies an IP address to the multimedia data-capable device 2, in response to a request for allocation of an IP address, a network address, received from the multimedia data-capable device 2. The IP address is selected from a predetermined IP address range. In this case, the control section 11 specifies an IP address for the first communication section 13, the specified IP address being different from the IP address notified to the multimedia data-capable device 2 but having the same network address. Further, in this example, the IP address to be notified does not have to be a so-called private address. Therefore, the IP address to be notified to the multimedia data-capable device 2 or to be specified for the first communication section 13 by the control section 11 may be an IP address which has a network address different from the network address of a private address which is likely to be specified for the second communication section 14.

Alternatively, the control section 11 may refer to an IP address specified for the second communication section 14, and when the control section 11 serves as a as a DHCP server, the control section 11 may function so that an IP address having a network address different from the network address of the IP address which has been referred to, is to be notified to the multimedia data-capable device 2 or to be specified for the first communication section 13. The control section 11 in this example functions as an address issuance section of the present disclosure.

Further, although, in the description given so far, the first and second communication sections 13 and 14 each include a network interface, the present embodiment is not limited thereto. For example, the first communication section 13 may include an optical connector and output multimedia data to the multimedia data-capable device 2 using optical signals. These optical connector and optical signals may be those defined in the S/PDIF (Sony/Philips Digital Interface Format) standard. Alternatively, a connector such as RCA terminal may be used rather than optical connector and optical signals.

Alternatively, the second communication section 14 may include a USB (Universal Serial Bus). Even if a USB is used, the second communication section 14 may include the switch portion 21 so as to operate under control of the control section 11 in the same manner as described above. The switch portion 21 is a relay or other device adapted to connect or disconnect the signal line between the host controller and the control section 11.

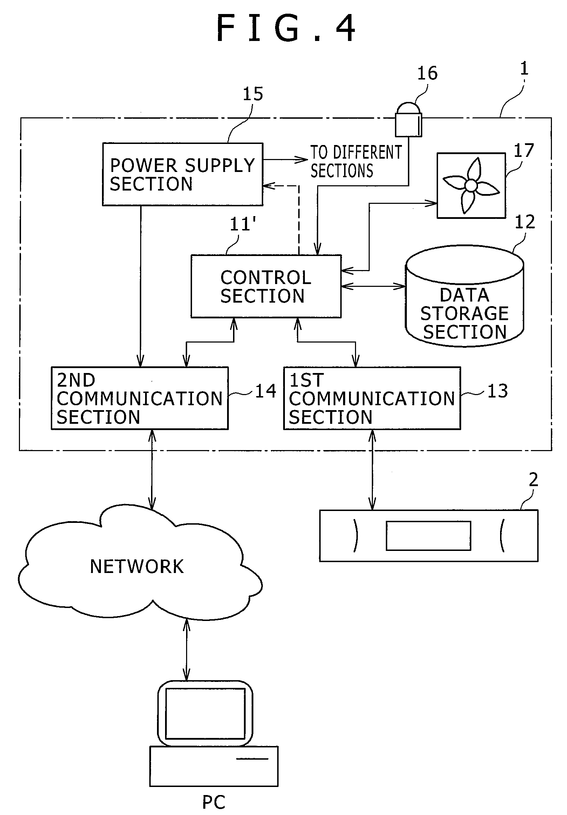

Still alternatively, the data storage device 1 in the present embodiment may include a sensor adapted to detect the presence or absence of any individual in the vicinity and perform a given control task based on the detection result of this sensor. More specifically, the data storage device 1 in this example includes a control section 11', the data storage section 12, the first and second communication sections 13 and 14, the power supply section 15, and a human sensor 16 as illustrated in Fig. 4. Further, the data storage device 1 in this case may also include a fan 17 adapted to discharge heat from inside the enclosure. It should be noted that like components to those shown in Fig. 1 are denoted by the same reference numerals and redundant description thereof will be omitted.

The control section 11' in this example performs a predetermined control task based on the detection result of the human sensor 16 as to the presence or absence of an individual in the vicinity in addition to the operation of the control section 11 illustrated in Fig. 1. The operation of the control section 11' will be described in detail later.

The human sensor 16 is, for example, a pyroelectric sensor attached to the enclosure of the data storage device 1. The human sensor 16 detects infrared radiation emitted by a human body and outputs a signal indicating the presence or absence of an individual in the vicinity of the data storage device 1. It should be noted that the human sensor 16 is not limited to a pyroelectric sensor, and any of a variety of well-known human sensors may be used as the human sensor 16. Among examples of these is a sensor adapted to detect the presence or absence of an individual in the vicinity of the data storage device 1 based on the presence or absence of reception of a wireless LAN signal of a mobile terminal carried by a user.

In the example of the data storage device 1 including the human sensor 16, if the fan 17 is provided, and if it is determined based on the operation of the human sensor 16 that an individual is present in the vicinity of the data storage device 1, the control section 11' may stop the fan 17. Further, if it is determined based on the operation of the human sensor 16 that no individual is present in the vicinity of the data storage device 1, the control section 11' may start the fan 17. This ensures that no noise is produced by the fan 17 when a user is in the vicinity of the data storage device 1. For example, when the data storage device 1 is installed in an audio room, the user can enjoy audio without being disturbed by noise produced by the fan 17.

Alternatively, the control section 11' may change the nature of the process it performs depending on whether it is determined that there is an individual in the vicinity of the data storage device 1. For example, the control section 11' may or may not perform maintenance processes (e.g., defragging) on the data storage section 12. In this case, the control section 11' is allowed to perform a maintenance process if it is determined based on the operation of the human sensor 16 that no individual is present in the vicinity of the data storage device 1. The control section 11' is not allowed to perform any maintenance process if it is determined based on the operation of the human sensor 16 that an individual is present in the vicinity of the data storage device 1.

In this case, the control section 11' does not perform any maintenance process on the data storage section 12 if it is determined based on the operation of the human sensor 16 that an individual is present in the vicinity of the data storage device 1. On the other hand, the control section 11' performs a maintenance process on the data storage section 12 if it is determined based on the operation of the human sensor 16 that no individual is present in the vicinity of the data storage device 1, and if the data storage section 12 has not been accessed for a given period of time. This ensures that no noise is produced as a result of a maintenance process when the user is in the vicinity of the data storage device 1. As a result, the user is less likely to be disturbed by noise.

## Claims

1. A data storage device (1) comprising:
a storage section (12) adapted to store multimedia data;
a first communication section (13) adapted to output multimedia data from the storage section (12) exclusively to a multimedia data-capable device (2);
a second communication section (14) provided separately from the first communication section (13) and adapted to exchange information with external equipment;
a switch portion;
a connection section (11) adapted to control the switch portion (21); and
a control section (11) adapted to control the exchange of information of the second communication section (14) with the storage section (12);
wherein
the switch portion is adapted to perform electrical connection/disconnection of the second communication section (14) to/from other circuit sections; and
the connection section (11) is adapted to control the switch portion to perform said electrical connection/disconnection of the second communication section (14) to/from the other circuit sections; **characterized in that**
the switch portion (21, 33) is adapted to perform electrical connection/disconnection of the second communication section (14) to/from the control section (11) and/or a power supply section (15) adapted to supply power to the second communication section (14); and
the connection section (11) is adapted to control the switch portion (21, 33) to perform said electrical connection/disconnection of the second communication section (14) to/from the control section (11) and/or the power supply section (15).

2. The data storage device (1) of claim 1, **characterized in that**
the connection section (11) is adapted to control the switch portion (33) so as to interrupt the supply of power to the second communication section (14) when multimedia data is read from the storage section (12) and output via the first communication section (13).

3. The data storage device (1) of any preceding claims, **characterized in that**
the switch portion (21) includes a physical relay unit.

4. The data storage device (1) of any preceding claims, **characterized in that**
the first (13) and second communication sections (14) each include a network interface, and
network addresses specified for the network interfaces of the first (13) and second communication sections (14) are different.

5. The data storage device (1) of claim 4, **characterized in that** it further comprises:
an address issuance section adapted to issue, to the multimedia data-capable device (2) connected via the first communication section (13), a network address for the same network as the network address specified for the first communication section (13).

6. The data storage device of any preceding claims, **characterized in that**
the first communication section (13) includes an optical connector and outputs multimedia data to the multimedia data-capable device (2) using optical signals.

7. The data storage device (1) of any preceding claims, **characterized in that** it further comprises:
a sensor (16) adapted to detect the presence or absence of any individual in the vicinity so as to perform a predetermined control task based on the detection result of the sensor (16).

## Patentansprüche

1. Eine Datenspeichervorrichtung (1), welche aufweist:
eine Speichereinrichtung (12), die dazu ausgelegt ist, Multimediadaten zu speichern;
eine erste Kommunikationseinrichtung (13), die dazu ausgelegt ist, Multimediadaten von der Speichereinrichtung (12) exklusiv an eine multimediadatenfähige Vorrichtung (2) auszugeben;
eine zweite Kommunikationseinrichtung (14), die separat von der ersten Kommunikationseinrichtung (13) vorgesehen und dazu ausgelegt ist, Informationen mit externen Einrichtungen auszutauschen;
eine Schaltvorrichtung;
eine Verbindungseinrichtung (11), die dazu ausgelegt ist, die Schaltvorrichtung (21) zu steuern; und
eine Steuervorrichtung (11), die dazu ausgelegt ist, den Informationsaustausch zwischen der zweiten Kommunikationseinrichtung (14) und der Speichereinrichtung (12) zu steuern;
wobei die Schaltvorrichtung dazu ausgelegt ist, eine elektrische Verbindung/Trennung der zweiten Kommunikationseinrichtung (14) mit/von anderen Schaltungseinheiten durchzuführen; und
die Verbindungseinrichtung (11) dazu ausgelegt ist, die Schaltvorrichtung so zu steuern, dass diese die elektrische Verbindung/Trennung der zweiten Kommunikationseinrichtung (14) mit/von den anderen Schaltungseinheiten durchführt;
**dadurch gekennzeichnet, dass**
die Schaltvorrichtung (21, 33) dazu ausgelegt ist, eine elektrische Verbindung/Trennung der zweiten Kommunikationseinrichtung (14) mit/von der Steuervorrichtung (11) und/oder einer Stromversorgungseinrichtung (15) durchzuführen, wobei die Stromversorgungseinrichtung (15) dazu ausgelegt ist, die zweite Kommunikationseinrichtung (14) mit Strom zu versorgen; und
die Verbindungseinrichtung (11) dazu ausgelegt ist, die Schaltvorrichtung (21, 33) so zu steuern, dass diese die elektrische Verbindung/Trennung der zweiten Kommunikationseinrichtung (14) mit/von der Steuervorrichtung (11) und/oder der Stromversorgungseinrichtung (15) durchführt.

2. Die Datenspeichervorrichtung (1) nach Anspruch 1, **dadurch gekennzeichnet, dass** die Verbindungseinrichtung (11) dazu ausgelegt ist, die Schaltvorrichtung (33) so zu steuern, dass diese die Versorgung der zweiten Kommunikationseinrichtung (14) mit Strom unterbricht, wenn Multimediadaten von der Speichereinrichtung (12) gelesen und über die erste Kommunikationseinrichtung (13) ausgegeben werden.

3. Die Datenspeichervorrichtung (1) nach einem der vorhergehenden Ansprüche, **dadurch gekennzeichnet, dass** die Schaltvorrichtung (21) eine physikalische Relaiseinheit umfasst.

4. Die Datenspeichervorrichtung (1) nach einem der vorhergehenden Ansprüche, **dadurch gekennzeichnet, dass** die erste (13) und die zweite Kommunikationseinrichtung (14) jeweils eine Netzwerkschnittstelle aufweisen und Netzwerkadressen, die für die Netzwerkschnittstellen der ersten (13) und der zweiten Kommunikationseinrichtung (14) festgelegt sind, sich voneinander unterscheiden.

5. Die Datenspeichervorrichtung (1) nach Anspruch 4, **dadurch gekennzeichnet, dass** sie weiter aufweist:
eine Adressausgabeeinrichtung, die dazu ausgelegt ist, an die über die erste Kommunikationseinrichtung (13) angeschlossene multimediadatenfähige Vorrichtung (2) eine Netzwerkadresse für dasselbe Netzwerk auszugeben, für das die Netzwerkadresse für die erste Kommunikationseinrichtung (13) festgelegt ist.

6. Die Datenspeichervorrichtung gemäß einem der vorhergehenden Ansprüche, **dadurch gekennzeichnet, dass** die erste Kommunikationseinrichtung (13) einen optischen Anschluss aufweist und Multimediadaten an die multimediadatenfähige Vorrichtung (2) unter Verwendung von optischen Signalen ausgibt.

7. Die Datenspeichervorrichtung (1) gemäß einem der vorhergehenden Ansprüche, **dadurch gekennzeichnet, dass** sie weiter aufweist:
einen Sensor (16), der dazu ausgelegt ist, die Anwesenheit oder Abwesenheit irgendeiner Person im Umkreis zu detektieren, um basierend auf dem Detektionsergebnis des Sensors (16) eine vorgegebene Steuerungsaufgabe durchzuführen.

## Revendications

1. Unité de stockage de données (1) comprenant :
une section de stockage (12) conçue pour stocker des données multimédia ;
une première section de communication (13) conçue pour sortir les données multimédia de la section de stockage (12) exclusivement vers un dispositif capable d'utiliser les données multimédia (2) ;
une seconde section de communication (14) prévue séparément de la première section de communication (13) et conçue pour échanger des informations avec un équipement externe ;
une partie de commutation ;
une section de connexion (11) conçue pour commander la partie de commutation (21) ; et
une section de commande (11) conçue pour commander l'échange d'informations entre la seconde section de communication (14) et la section de stockage (12) ;
dans laquelle
la partie de commutation est conçue pour réaliser la connexion/déconnexion électrique de la seconde section de communication (14) avec/des autres sections de circuit ; et
la section de connexion (11) est conçue pour commander à la partie de commutation de réaliser ladite connexion/déconnexion électrique de la seconde section de communication (14) avec/des autres sections de circuit ;
**caractérisée en ce que**
la partie de commutation (21, 33) est conçue pour réaliser la connexion/déconnexion électrique de la seconde section de communication (14) avec/de la section de commande (11) et/ou une section d'alimentation électrique (15) conçue pour fournir de l'énergie à la seconde section de communication (14) ; et
la section de connexion (11) est conçue pour commander à la partie de commutation (21, 33) de réaliser ladite connexion/déconnexion électrique de la seconde section de communication (14) avec/de la section de commande (11) et/ou la section d'alimentation électrique (15).

2. Unité de stockage (1) selon la revendication 1, **caractérisée en ce que**
la section de connexion (11) est conçue pour commander la partie de commutation (33) de manière à interrompre l'alimentation électrique de la seconde section de communication (14) lorsque les données multimédia sont lues dans la section de stockage (12) et transmises via la première section de communication (13).

3. Unité de stockage (1) selon l'une quelconque des revendications précédentes, **caractérisée en ce que**
la partie de commutation (21) comprend un bloc relais physique.

4. Unité de stockage (1) selon l'une quelconque des revendications précédentes, **caractérisée en ce que**
les première (13) et seconde sections de communication (14) incluent, chacune, une interface réseau, et
les adresses réseaux indiquées pour les interfaces réseaux des première (13) et seconde sections de communication (14) sont différentes.

5. Unité de stockage (1) selon la revendication 4, **caractérisée en ce qu'**elle comprend en outre :
une section de délivrance d'adresse conçue pour délivrer, au dispositif capable d'utiliser les données multimédia (2) connecté via la première section de communication (13), une adresse réseau pour le même réseau que l'adresse réseau indiquée pour la première section de communication (13).

6. Unité de stockage selon l'une quelconque des revendications précédentes, **caractérisée en ce que**
la première section de communication (13) inclut un connecteur optique et envoie les données multimédia au dispositif capable d'utiliser les données multimédia (2) grâce à des signaux optiques.

7. Unité de stockage (1) selon l'une quelconque des revendications précédentes, **caractérisée en ce qu'**elle comprend en outre :
un capteur (16) conçu pour détecter la présence ou l'absence de tout individu à proximité, de manière à exécuter une tache de commande prédéterminée sur la base du résultat de la détection du capteur (16).
